# EUROPÄISCHE PATENTANMELDUNG

(11) **EP 1 143 202 A1**
(43) Veröffentlichungstag der Anmeldung: **10.10.2001**
(21) Anmeldenummer: 00107063.0
(22) Anmeldetag: 04.04.2000
(51) Int. Cl.: F24F 11/00, F24F 6/02, G05D 22/02

(54) **Gerät zur vollautomatischen Erhöhung der relativen Luftfeuchtigkeit in geschlossenen Räumen**

(71) Anmelder: Bergmann, Kent, 10715 Berlin - Wilmersdorf (DE)
(72) Erfinder: Bergmann, Kent, 10715 Berlin - Wilmersdorf (DE)

(57) **Zusammenfassung**

Das System hat Festanschlüsse und regelt über ein Verdungstungs- oder Verdampungsprozess von Flüssigkeit über die Soll-Istwertbestimmung eines Hygrostaten automatisch die relative Luftfeuchtigkeit in geschlossenen Räumen unter Beihilfe einer thermischen Energiequelle

## Beschreibung

Die Erfindung betrifft ein Gerät zur Erhöhung der relativen Luftfeuchtigkeit in geschlossenen Räumen zum Zwecke einer Erreichung der optimalen relativen Luftfeuchtigkeit für Menschen oder Säugetiere bezogen auf deren Gesundheit. Zielsetzung hierbei ist ein Wert zwischen 40%-70% relativer Luftffeuchtigkeit in geschlossenen Räumen zu erreichen, was nachfolgend näher erläutert wird.

Das Gerät arbeitet Vollautomatisch, hat einen Festsanschluß von zwei Medien, zum einen Wasser oder andere Verbindungen und zum anderen eine weitere Energiequelle wie beispielsweise die elektrische Spannung. Weiterhin besteht ein direkter Zusammenhang dieser beiden Medien und einem damit in Verbindung stehenden Hygrostaten bzw. Hygrometer. Letzterer ist regelbar und bestimmt den Sollwert des Gerätes der Erfindung im jeweils eingestetzten Raum.

Unter Sollwert versteht sich die relative Luftfeuchtigkeit in der jeweils eingesetzten Lage oder Ortes.

Die Erfindung funktioniert nach folgenden grundlegenden Schemen bzw. Prinzipien: Ein intern oder externer Gerätehygrostat bzw. Hygrometer beeinflußt direkt eine Verdunstung oder Verdampfung von z.B. Wasser unter Zuhilfenahme einer Energiequelle z.B. Wärmeabgabe einer angesteuerten elektrischen Heizung. Das sich in einem Behälter befindlichen Wasser wird in diesem Fall direkt erwärmt und in den eingesetzten Raum duch Verdampfung oder Verdunstung abgegeben. Nach Erreichung des voreingestellten Sollwertes am Hygrostaten, schaltet der Heizkörper ab. Das Wasserniveau wird durch zwei Fühler im besagtem Behälter ermittelt und erreicht im Minimum hierbei nicht die Oberfläche des Heizkörpers und im Maximum nicht die obere Begrenzung des Wasserbehälters.

Das Nachfüllen des Wasserbehälters basiert auf eine Ansteuerung eines in Wassermenge und Wasserdruck justierten Magnetventiles, daß bei Unterschreitung des unteren Wasserniveau angesteuert wird und bei Erreichung des oberen Wasserstandes abschaltet.

Aus Sicherheitsgründen wird hier von zwei in Reihe angesteuerten Magnetventilen ausgegangen. Zum Schutz der Heizung oder Brandschäden sind am Heizkörper ein Fühler gegen Überhitzung angebracht (Thermostat gegen Überhitzung)- auch Trockengehschutz genannt - sowie ein Thermostatfühler zur Einstellung der Wassertemeratur, um ein kochendes Wasser zu vermeiden.

Nach einer durch Fehlfunktion entstehenden Abschaltung durch Überhitzung des Gerätes, kann nur nuch durch autorisiertes Fachpersonal eine Wiederinbetriebnahme erfolgen, da der Überhitzungsschutz in diesem Fall ausgelöst hat, bei dem von außen ein "reset" nicht durchführbar ist. Der "Trockengehschutz"ist somit als Prioritätserster in eine Störmeldekette der Ansteuerung des Gerätes eingegliedert, gefolgt von einer Überhöhung des Wasserniveaus gemessen durch ein Zeitglied bei Überschreitung des Füllstandes.

Die von außen zugeführten Funktionsmedien des Gerätas sind intern mit Hauptschalter, Feinsicherung sowie einem Absperrhahn versehen, um den jeweiligen Betriebsbestimmungungen gerecht zu werden.

Die Basisanschlüsse können Aufputz oder Unterputz an das Gerät herangeführt werden, je nach Ausführung. Unwesentlich ist der Ort der Montage, die grundlegende Funktion ist immmer ausschlaggebend.

Zur schematischen Darstellung ist eine Zeichnung beigefügt.

Im Ergebnis der Blockbilddarstellung wurde die relative Luftfeuchtigkeit bereits im Praxisversuch von Ist:20% auf Soll:50% erhöht und wurde auch bis jetzt gehalten. (Einsatz in einem Reisebüro mir viel lagernder Katalogware in Berlin).

Die Erfindung beruht auf eigenen negativen Erfahrungen bei längerem Aufenthalt in z.B klimatisierten Räumen.

Hier wird durch vorhandene Klimaanlagen die relative Luftfeuchtigkeit auf ein dem menschlichen Körper schädigendes Maß reduziert, was zur Folge z.B. Austrocknung der Atemwege, Reizung der Augen oder Austrocknung der Haut zur Folge hat. Durch die Erfindung treten diese negativen Erscheinungen nicht mehr auf. Der Einsatz in Räumen mit viel saugfähigen Materialien wie z.B. Papier ist ebenfalls angedacht, da hier auch der Raumluft die Luftfeuchtigkeit entzogen wird. Die Erfindung wird bereits erfolgreich in einem Versuch in einem Reisebüro in Berlin eingesetzt, wo vorher ständig Mitarbeiter erkrankten.

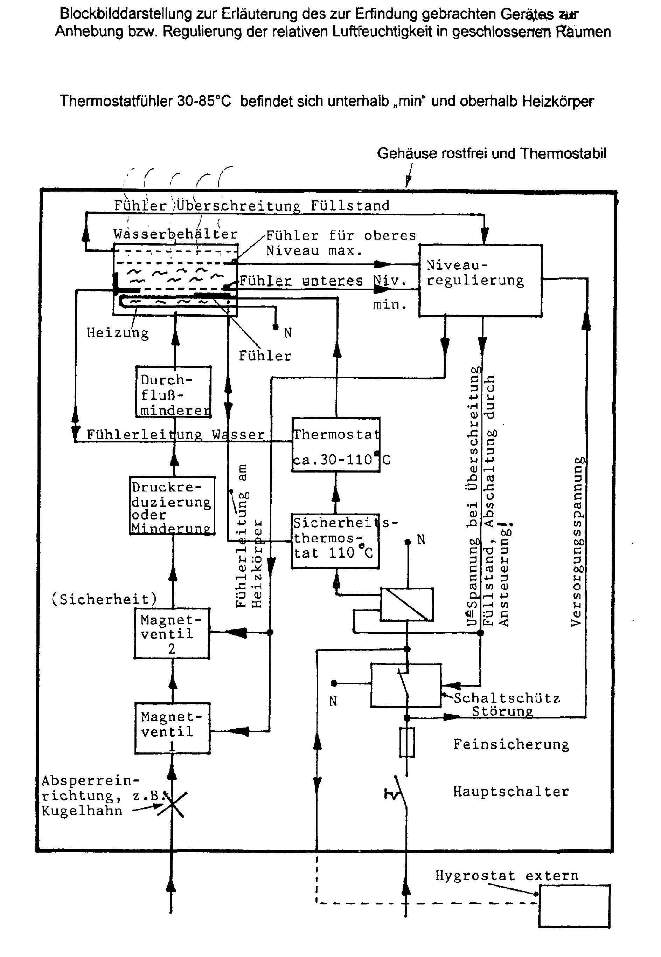

## Patentansprüche

1. Vollautomatisches Gerät zur Erhöhung oder Anhebung der relativen Luftfeuchtigkeit in geschlossenen Räumen, **dadurch gekennzeichnet, daß** unter Bezugnahme von festen oder beweglichen Medienanschlüssen die relative Luftfeuchtigkeit auf über 40% erhöht wird (des jeweils betreffenden Raumes), im Zusammenarbeit einer dafür geeigneten Meßeinrichtung zur Sollwertbestimmung oder Istwertfeststellung.

2. Gerät nach Anspruch 1, das vollautomatisch die relative Luftfeuchtigkeit auf über 40% unter Verwendung fester oder beweglicher Medienanschlüsse erhöht bzw. nach voreingestelltem Sollwert des betreffenden Eisatzorts automatisch abschaltet und bei Unterschreitund des voreingestellten Sollwertes automatisch selbigen wieder anstrebt, unter der Einschränkung der im Gesamtsystem verwendeten Toleranzen einzelner zur Anwendung kommender Bauteile oder Baugruppen, was jedoch fundamental keine Einschränkung der Funktionsweise des Gerätes ergibt.
